# EUROPÄISCHE PATENTSCHRIFT

(11) **EP 2 586 514 B1**
(45) Veröffentlichungstag und Bekanntmachung des Hinweises auf die Patenterteilung: **02.07.2014**
(21) Anmeldenummer: 12006768.1
(22) Anmeldetag: 27.09.2012
(51) Int. Cl.: B01D 45/08, B01D 46/00, B01D 50/00

(54) **Sausystem mit Filtereinheit**
Suction system with a filter unit
Système d'aspiration avec une unité de filtration

(30) Priorität: 28.10.2011 DE 202011051810 U
(43) Veröffentlichungstag der Anmeldung: 01.05.2013
(73) Patentinhaber: ESTA Apparatebau GmbH & Co.KG, 89250 Senden (DE)
(72) Erfinder: Frank, Bernhard, 89073 Ulm (DE); Krater, Sebastian, 89195 Staig (DE)
(74) Vertreter: Meyer, Thorsten

(56) Entgegenhaltungen:
- DE-A1- 3 805 718
- DE-C- 801 011
- US-A- 3 726 066
- US-A- 3 831 354
- US-A- 4 655 804
- US-A- 5 030 261
- US-A- 5 588 985
- US-A1- 2009 020 011
- US-A1- 2009 056 545

## Beschreibung

Die Erfindung betrifft ein Saugsystem mit einer Prozesseinheit und einem in der Prozesseinheit eingestellten Saugvolumenstrom mit Partikelbelastung.

Bei professionellen Saugsystemen besteht der Wunsch, dass eine möglichst effiziente Vorabscheidung von Partikeln in einem partikelbelasteten Saugvolumenstrom vor Eintritt in die Filter erfolgt, um die Standzeit von Saugsystemen zu erhohen.

Beim Stand der Technik müssen dabei die Filter in den Prozesseinheiten sehr häufig abgeblasen werden, um die Partikel von der zugesetzten Filteroberflache in den unter den Filtern befindlichen Sammelbehältern zu transportieren. Wahrend der Reinigungsphase ist das Saugsystem dabei nicht einsatzfahig, was zu Verzogerungen im Arbeitsablauf führt.

Aus der US 2009/0056545 A1 ist eine Filteranordnung bekannt, bei der Rundfilter, die einen Prozessraum von einem Filtratraum trennen bekannt geworden, bei dem unterhalb der Filter ein angeströmtes Lochblech angeordnet ist um Grobschmutz im Volumenstrom abzutrennen. Nachteilig bei der vorgeschlagenen Anordnung ist, dass der Volumenstrom nicht optimal auf die Rundfilter gefuhrt ist.

Aus der US 3,831,354 ist eine Luftauslassanordnung für Staubsammeleinrichtungen bekannt geworden, bei der ein staubbelasteter Hochgeschwindigkeitsstrom aus einem kleinem Querschnitt durch aerodynamische Diffusion in einen langsameren Strcm in einem großen Querschnitt überfuhrt wird, wobei die Partikel gleichmäßig verteilt werden sollen.

Aufgabe der Erfindung ist es ein verbessertes Saugsystemen mit erhöhter Standzeit zur Verfügung zu stellen, bei der eine effektivere Abscheidung der Partikel aus Saugvolumenstrcm erfolgt.

Diese Aufgabe wird durch eine Saugsystem mit einer Prozesseinheit nach den Merkmalen des Anspruchs 1 gelost.

Erfindungsgemäß ist ein Saugsystem mit einer Prozesseinheit und einem in der Prozesseinheit einstellbaren Saugvolumenstrom mit Partikelbelastung vorgesehen, wobei der Saugvolumenstrom durch einen Stutzen in die Prozesseinheit einleitbar ist, wobei der Saugvolumenstrom durch einen Stutzen durch eine Eintrittsöffnung an der Prozesseinheit in die Prozesseinheit in einem mittleren Bereich zwischen Boden und Decke der Prozesseinheit in diese einleitbar ist, wobei in der Prozesseinheir Filter angeordnet sind über die der Saugvolumenstrom aus diesen in einen Filtratraum abziehbar ist, wobei die Filter als vertikal von unterhalb der Decke von einer einen Prozessraum und den Filtratraum Trennenden Zwischendecke herabragende angeordnete Rundfilter ausgebildet sind, wobei der Saugvolumenstrom zunächst in einer initialen Einströmrichtung in die Prozesseinheit durch die Eintrittsoffnung in einen Eintrittsbereich einfließt, wobei im Eintrittsbereich, der Eintrittsöffnung in Einströmrichtung nachgeordnet, ein Leitblech mit Durchströmöffnungen angeordnet ist, wobei das Leitblech den Saugvolumenstrom zu einem größeren Teil entsprechend der Formung und Richtung bzw. Anstellung des Leitblechs aus der initialen Einströmrichtung umlenkt, und wobei das Leitblech dergestalt ausgestaltet ist, dass sich der Strömungsquerschnitt in Stromungsrichtung nach dem Leitblech erweitert, und das Leitblech so geformt ist, dass sich in der Prozesseinheit im Bereich der Stromungszone um die Filter eine rotatorische Stromung ausbildet, wobei die Eintrittsöffnung eine Mittelachse definiert, wobei das Leitblech am unteren Ende der Eintrittsöffnung anschließt und unter einem Winkel nach oben von der Eintrittsöffnung weg verläuft, so dass der Saugvolumenstrom zu einem kleineren Teil durch eine Vielzahl von in dem Leitblech vorgesehenen Durchstromungsoffnungen weiter in Richtung der Einstromrichtung auf die Filter hin leitbar ist, wobei das Leitblech ab dem Bereich oberhalb der Mitte bzw. der Mittelachse der Eintrittsoffnung abknickt und senkrecht nach oben verläuft. Hierdurch ist auf besonders effektive Weise die Abbremsung des Saugvolumenstroms in der Prozesseinheit gegeben, da eine Gegenströmung bzw. ein Gegendruck aufgebaut wird. Dadurch können sich die Partikel in den unteren Bereich der Anlage absetzen. Die Formung des Leitblechs ist nach der Erfindung so gewahlt, dass durch den Saugvolumenstrom eine Durchströmung des Inncnraums der Prozesseinheit erfolgt, wobei durch den Teilvolumenstrom durch die Durchströmungsöffnungen unterhalb des Eintrittsbereichs und hinter dem Leitblech eine Abbremsung des Volumenstroms eintritt, sodass sich eine beruhigte Zone unterhalb des Eintrittsbereichs einstellt und oberhalb des Eintrittsbereichs sich eine Stromungszone einstellt.

Dem folgend ist nach einer besonders bevorzugten Weiterbildung der Erfindung vorgesehen, dass das Leitblech in seiner flachigen Ausdehnung großer ist als die Öffnungsweite der Eintrittsöffnung, so dass kein nicht abgelenkter Saugvolumenstrom in den Innenraum der Prozesseinheit kommt.

Bevorzugterweise sind dem folgend die Filter im Bereich cer Stromungszone angeordnet.

Bevorzugterweise bildet die Vielzahl von Durchstromungsoffnungen in dem Leitblech zusammen eine freie Querschnittsfläche von 10 % bis 50 %.

Von Vorteil sind die Durchstromungsoffnungen durch Rundlocher gebildet, wobei der Durchmesser der Rundlöcher insbesondere 2 bis 6 mm beträgt.

Der untere Bereich des Saugsystems ist von Vorteil unter- und/oder innerhalb der beruhigten Zone als Partikel-Sammelbehälter abnehmbar ausgestaltet.

Von Vorteil ist nach einer weiteren Ausgestaltung der Erfindung vorgeschlagen, dass das Leitblech gegen den im jeweiligen Bereich ummittelbar auftreffenden Volumenstrom unter einem Winkel von großer 90° und kleiner 180° angestellt ist.

Weitere vorteilhafte Ausgestaltungen ergeben sich aus den weiteren Unteranspruchen oder deren mogliche Unterkombinationen.

Nachfolgend wird die Erfindung anhand der Zeichnungen weiter erläutert. Im Einzelnen zeigt die schematische Darstellung in:
- Fig. 1: eine schematische Schnitt-Darstellung eines Saugsystems mit einem Lamellenfilter,
- Fig. 2: eine Darstellung entsprechend Fig. 1 mit schematisch eingezeichnetem Saugvolumenstrom und dessen Aufteilung in größeren und kleineren Teil, sowie dessen Abführung als Gesamtvolumenstrom aus der Vorrichtung,
- Fig. 3: eine schematische Darstellung eines Leitblechs für die Anwendung in einem Saugsystem nach der Fig. 1,
- Fig. 4: eine schematische Seitenansicht des Leitblechs aus Fig. 3,
- Fig. 5: eine schematische Schnitt-Darstellung eines erfindungsgemäßen Saugsystems mit Rundfiltern,
- Fig. 6: eine Darstellung entsprechend Fig. 5 mit schematisch eingezeichnetem Saugvolumenstrom und dessen Aufteilung in größeren und kleineren Teil, sowie dessen Abführung als Gesamtvolumenstrom aus der Vorrichtung,
- Fig. 7: eine weitere Schnittdarstellung in einer horizontalen Ebene entsprechend Fig. 6 mit schematisch eingezeichneten Saugvolumenstrom und dessen Aufteilung in größeren und kleineren Teil, wobei die rotatorische Führung des größeren Teils um die Rundfilter herum ersichtlich ist,
- Fig. 8: eine schematische Darstellung eines erfindungsgemäßen Leitblechs für die Anwendung in einem Saugsystem nach der Fig. 5, und
- Fig. 9: eine schematische Seitenansicht des Leitblechs aus Fig. 8.

Die in den Figuren gleichen Bezugsziffern bezeichnen gleiche oder gleich wirkende Elemente.

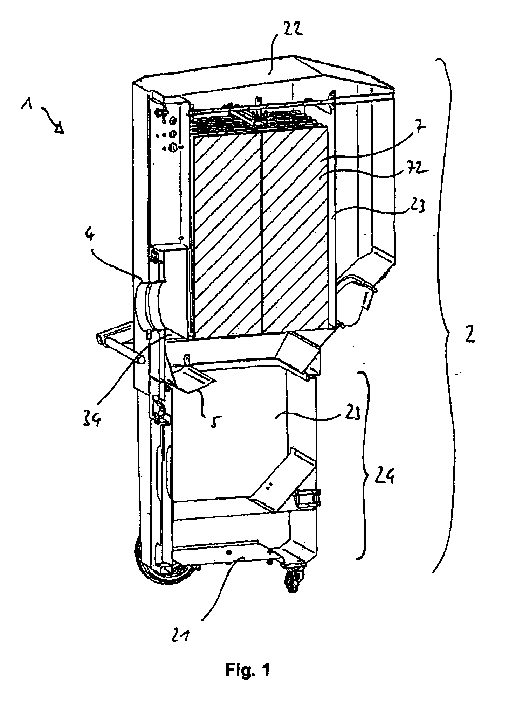

In den Fig. 1 ist ein Saugsystem 1 in einer schematischen Schnitt-Darstellung durch die Prozesseinheit 2 mit Filter 7 und Partikel-Sammelbehälter 24 gezeigt. Das erste gezeigte Beispiel ist dabei mit einem Lamellenfilter 72 ausgestattet.

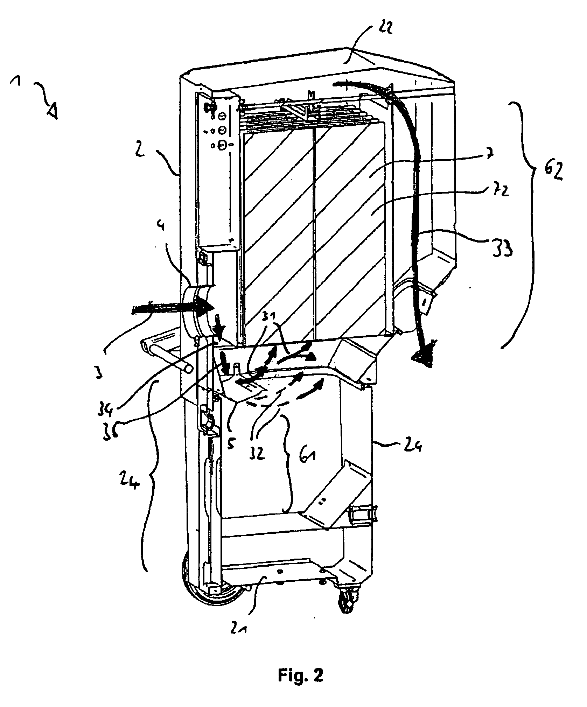

Der Saugvolumenstrom wird dabei über einen Stutzen 4, der in einem mittleren Bereich zwischen Boden 21 und Decke 22 der Prozesseinheit 2 angeordnet ist, durch eine Eintrittsöffnung 34 ins Innere 23 der Prozesseinheit 2 geführt, wobei er über das Leitblech 5 umgeformt wird. Danach wird der Volumenstrom über die Filter 7 aus der Prozesseinheit 2 abgesaugt. Siehe im folgenden Fig. 2.

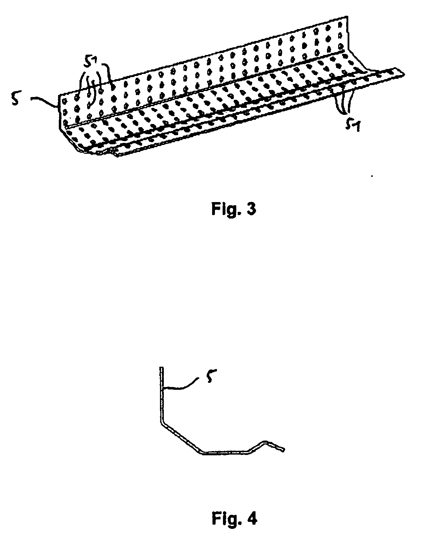

In Fig. 2 sind die Volumenströme schematisch dargestellt. Nach dem Stutzen 4 und dem Eintritt durch die Eintrittsöffnung 34 wird der partikelbelastete Saugvolumenstrom 3 in Richtung der initialen Einströmrichtung 35 auf das Leitblech 5 geführt, das den Saugvolumenstrom 3 zu einem größeren Teil 31 entsprechend der Formung und Richtung des Leitblechs 5 umlenkt, und zu einem kleineren Teil 32 durch eine Vielzahl von in dem Leitblech 5 vorgesehenen Durchströmungsöffnungen 51 (siehe Fig. 3) im gezeigten Beispiel weiter radial zur Mitte der Prozesseinheit 2 leitet. Dabei weitet sich die Öffnungsweite des Leitblechs 5 für den Volumenstrom 3 in Richtung gegen die Filter 7.

Hierdurch erfolgt eine Durchstromung des Innenraums 23 der Prozesseinheit 2, wobei durch den Teilvolumenstrom 32 durch die Durchstromungsöffnungen 51 im Leitblech 5 unterhalb des Eintrittsbereichs und hinter dem Leitblech 5 eine Abbremsung des Volumenstroms eintritt, sodass sich eine beruhigte Zone 61 unterhalb des Eintrittsbereichs einstellt und oberhalb des Eintrittsbereichs sich eine Stromungszone 62 einstellt. Hierdurch wird ein Großteil der Partikel aus dem Saugvolumenstrom abgebremst und in der beruhigten Zone 61 zum Boden des Partikel-Sammelbehalters 24 abgesetzt. Die Standzeit der Filter ist verlängert da ein Zusetzen mit Partikeln durch deren Absetzen verhindert wird.

Dadurch, dass die Filter 7 im Bereich der Stromungszone 62 angeordnet sind, ist eine optimale Anstromung gegeben und diese können optimal arbeiten.

Die vertikal von der Decke 22 herabragenden Lamellenfilter 7, 72 werden dabei durch das Leitblech 5 in der Prozesseinheit 2 im Bereich der Stromungszcne 62 angestromt. Der Gesamtvolumenstrom 33 wird über die Filter 7 aus der Prozesseinheit 2 mit einem Sauggeblase (nicht dargestellt) abgezogen.

Der im unteren Bereich der Prozesseinheit 2 angeordnete Partikel-Sammelbehälter 24 ist abnehmbar ausgestaltet, wodurch ein bequemes Entleeren ermöglicht ist.

In Fig. 3 ist das Leitblech 5 des Saugsystems 1 nach der ersten Variante näher dargestellt. Es ist so geformt, dass es den Saugvolumenstrom zu einem größeren Teil entsprechend der Formung umlenkt, und zu einem kleineren Teil durch eine Vielzahl von vorgesehenen Durchströmungsöffnungen 51 leitet. Die Durchströmungsöffnungen 51 in dem Leitblech 5 bilden zusammen dabei eine freie Querschnittsfläche von 10 bis 50 %. Die Durchströmungsöffnungen 51 sind im gezeigten Beispiel durch Rundlocher gebildet, wobei der Durchmesser der Rundlocher ca. 2 bis 6 mm beträgt.

Das Leitblech 5 ist in einer Seitenansicht in Fig. 4 nochmals gezeigt.

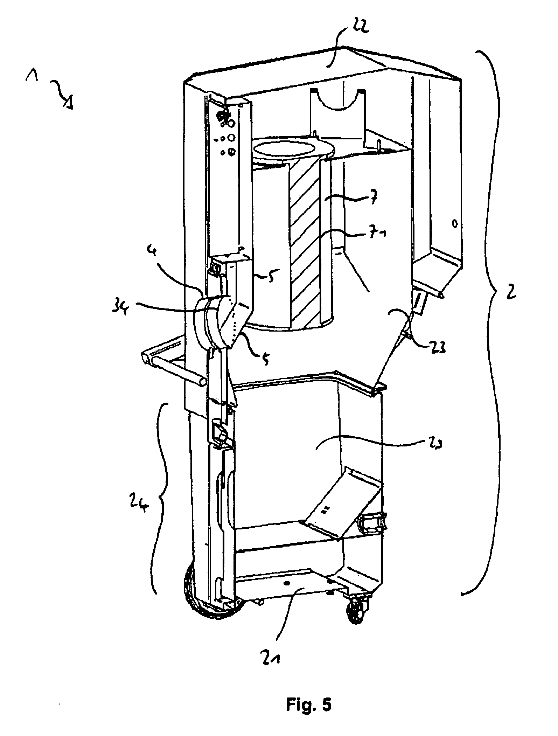

In den Fig. 5 bis 7 ist das erfindungsgemaße Saugsystem mit Rundfiltern 71 als Filter gezeigt. Das dort angeordnete Leitblech 5 ist entsprechend anders geformt als in der ersten Variante nach den Fig. 1 bis 4, um entsprechend den vertikal von der Decke 22 herabragenden Rundfiltern 71 in der Prozesseinheit 2 im Bereich der Stromungszone 62 um die Filter 7, 71 eine rotatorische Strömung mit dem größeren Teil 31 des Volumenstroms auszubilden.

Der Gesamtvolumenstrom 33 wird wie im Beispiel der ersten Variante nach Eintritt durch die Eintrittsoffnung 34 in den Innenraum über die Filter 7 aus der Prozesseinheit 2 abgezogen.

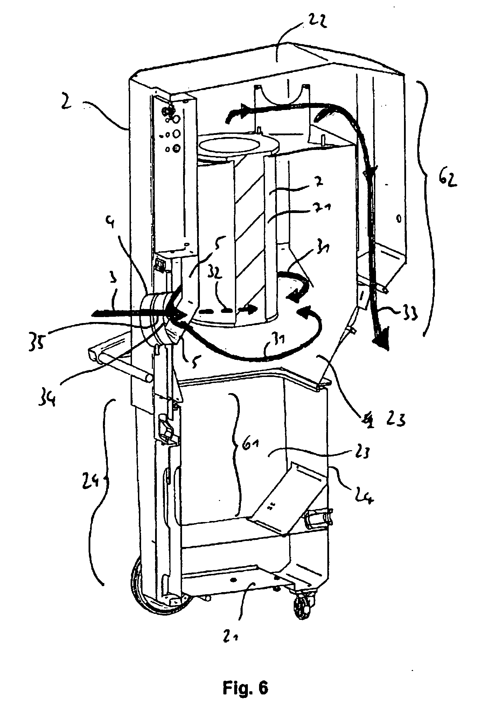

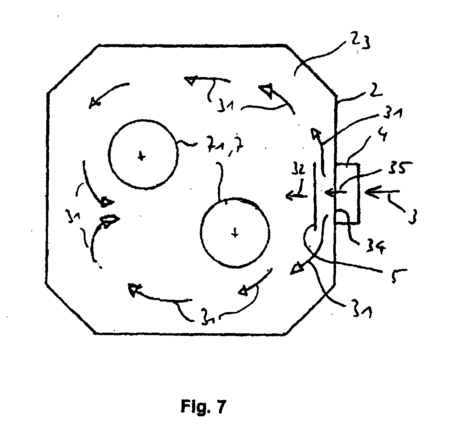

Die Fig. 6 und 7 verdeutlichen die sich einstellenden Volumenströme in einer vertikalen und horizontalen Schnittdarstellung, wobei wieder durch die Durchströmungsöffnungen im Leitblech 5 ein kleinerer Teilvolumenstrom 32 in Richtung der Einströmrichtung 35 abgetrennt wird um dem sich einstellenden rotierenden größeren Teil 31 abzubremsen, damit sich wieder eine beruhigte Zone im und über dem Partikel-Sammelbehälter 24 einstellen kann. Auch hier weitet sich der Querschnitt des Leitblechs 5 für den Saugvolumenstrom in Richtung gegen die Filter 7.

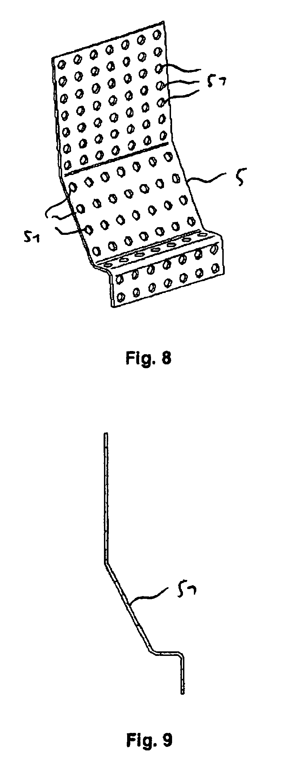

In Fig. 8 ist das erfinderische Leitblech 5 des Saugsystems 1 nach der zweiten Variante naher dargestellt. Es ist wiederum so geformt, dass es den Saugvolumenstrom zu einem größeren Teil entsprechend der Formung umlenkt, und zu einem kleineren Teil durch eine Vielzahl von vorgesehenen Durchstromungsoffnungen 51 leitet. Die Durchströmungsöffnungen 51 in dem Leitblech 5 bilden zusammen dabei wie im ersten Beispiel eine freie Querschnittsfläche von 10 bis 50 %. Die Durchströmungsöffnungen 51 sind im gezeigten Beispiel durch Rundlöcher gebildet, wobei der Durchmesser der Rundlöcher ca. 2 bis 6 mm betragt.

Das Leitblech 5 aus Fig. 8 ist in einer Seitenansicht in Fig. 9 nochmals gezeigt.

### Bezugszeichenliste

- 1: Saugsystem

- 2: Prozesseinheit
- 21: Boden
- 22: Decke
- 23: Innenraum
- 24: Partikel-Sammelbehälter

- 3: Saugvolumenstrom
- 31: größerer Teil
- 32: kleinerer Teil
- 33: Gesamtvolumenstrom
- 34: Eintrittsöffnung
- 35: initiale Einströmrichtung

- 4: Stutzen

- 5: Leitblech
- 51: Durchströmungsöffnung

- 61: beruhigte Zone
- 62: Strömungszone

- 7: Filter
- 71: Rundfilter
- 72: Lamellenfilter

## Patentansprüche

1. Saugsystem (1) mit einer Prozesseinheit (2) und einem in der Prozesseinheit (2) einstellbaren Saugvolumenstrom (3) mit Partikelbelastung, wobei der Saugvolumenstrom (3) durch einen Stutzen (4) in die Prozesseinheit (2) einleitbar ist,
wobei der Saugvolumenstrom (3) durch einen Stutzen (4) durch eine Eintrittsöffnung (34) an der Prozesseinheit (2) in die Prozesscinheit (2) in einem mittleren Bereich zwischen Boden (21) und Decke (22) der Prozesseinheit (2) in diese einleitbar ist, wobei in der Prozesseinheit (2) Filter (7) angeordnet sind über die der Saugvolumenstrom (3) aus diesen in einen Filtratraum abziehbar ist,
wobei die Filter (7) als vertikal von unterhalb der Decke (22) von einer einen Prozessraum und den Filtratraum trennenden Zwischendecke (22a) herabragende angeordnete Rundfilter (71) ausgebildet sind,
wobei der Saugvolumenstrom (3) zunächst in einer initialen Einströmrichtung (35) in die Prozesseinheit (2) durch die Eintrittsöffnung (34) in einen Eintrittsbereich einfließt, wobei im Eintrittsbereich, der Eintrittsöffnung (34) in Einströmrichtung (35) nachgeordnet, ein Leitblech (5) mit Durchströmöffnungen (51) angeordnet ist,
wobei das Leitblech (5) den Saugvolumenstrom (3) zu einem größeren Teil (31) entsprechend der Formung und Richtung bzw. Anstellung des Leitblechs (5) aus der initialen Einströmrichtung (35) umlenkt, und
wobei das Leitblech (5) dergestalt ausgestaltet ist, dass sich der Strömungsquerschnitt in Strömungsrichtung nach dem Leitblech (5) erweitert, und das Leitblech (5) so geformt ist, dass sich in der Prozesseinheit (2) im Bereich der Strömungszone (62) um die Filter (7, 71) eine rotatorische Strömung ausbildet,
wobei die Eintrittsoffnung (34) eine Mittelachse definiert, wobei das Leitblech (5) am unteren Ende der Eintrittsöffnung (34) anschließt und unter einem Winkel nach oben von der Eintrittsoffnung (34) weg verläuft, so dass der Saugvolumenstrom zu einem kleineren Teil (32) durch eine Vielzahl von in dem Leitblech (5) vorgesehenen Durchströmungsöffnungen (51) weiter in Richtung der Einstromrichtung (35) auf die Filter (7) hin leitbar ist,
wobei das Leitblech (5) ab dem Bereich oberhalb der Mitte bzw. der Mittelachse der Eintrittsöffnung (34) abknickt und senkrecht nach oben verlauft.

2. Saugsystem nach Anspruch 1,
**dadurch gekennzeichnet,**
**dass** das Leitblech (5) in seiner flachigen Ausdehnung großer ist als die Öffnungsweite der Eintrittsöffnung (34).

3. Saugsystem nach einem der vorhergehenden Anspruche,
**dadurch gekennzeichnet,**
**dass** die Vielzahl von Durchströmungsöffnungen (51) in dem Leitblech (5) zusammen eine freie Querschnittsfläche von 10 % bis 50 % der Oberfläche des Leitblechs (5) bilden.

4. Saugsystem nach einem der vorhergehenden Ansprüche,
**dadurch gekennzeichnet,**
**dass** die Durchstromungsoffnungen (51) durch Rundlöcher gebildet sind, wobei der Durchmesser der Rundlöcher insbesondere 2 bis 6 mm betragt.

5. Saugsystem nach einem der vorhergehenden Ansprüche,
**dadurch gekennzeichnet,**
**dass** der untere Bereich der Prozesseinheit (2) unter- und/oder innerhalb der beruhigten Zone als Partikel-Sammelbehälter (24) abnehmbar ausgestaltet ist.

## Claims

1. A suction system (1) with a processing unit (2) and a suction volume flow (3) with particle contamination, which volume flow (3) can be set in the processing unit (2), wherein the suction volume flow (3) can be introduced to the processing unit (2) through a connecting piece (4),
wherein the suction volume flow (3) can be introduced into the processing unit (2) through a connecting piece (4) through an entry opening (34) on the processing unit (2) into the processing unit (2) in a middle region between the bottom (21) and the top (22) of the processing unit (2), wherein in the processing unit (2) filters (7) are arranged by way of which the suction volume flow (3) can be drawn from them into a filtrate space,
wherein the filters (7) are designed as round filters (71) that are arranged so as to project down vertically from below the top (22) from an intermediate ceiling (22a) that separates a processing space from the filtrate space,
wherein the suction volume flow (3) first in an initial direction of inflow (35) flows into the processing unit (2) through the entry opening (34) into an entry region, wherein in the entry region, downstream of the entry opening (34) in the direction of inflow (35), a guiding plate (5) with flow-through openings (51) is arranged,
wherein the guiding plate (5) to a larger part (31) deflects the suction volume flow (3) according to the shape and direction or angular position of the guiding plate (5) from the initial direction of inflow (35), and
wherein the guiding plate (5) is designed in such a manner that the flow cross-section expands in the direction of inflow downstream of the guiding plate (5), and the guiding plate (5) is formed so that a rotatory flow forms in the process unit (2) in the region of the flow zone (62) around the filters (7, 71),
wherein the entry opening (34) defines a centre axis, wherein the guiding plate (5) follows on from the bottom end of the entry opening (34) and leads upwards at an angle away from the entry opening (34) so that the suction volume flow to a smaller part (32) can be guided onwards through a multitude of flow-through openings (51) provided in the guiding plate (5) in the direction of inflow (35) towards the filters (7),
wherein the guiding plate (5) kinks from the region above the middle or the centre axis of the entry opening (34) and extends perpendicularly upwards.

2. The suction system according to claim 1, **characterised in that** the area of the guiding plate (5) is larger than the opening width of the entry opening (34).

3. The suction system according to one of the preceding claims, **characterised in that** the multitude of flow-through openings (51) in the guiding plate (5) together form a free cross-sectional area of 10% to 50% of the surface of the guiding plate (5).

4. The suction system according to any one of the preceding claims, **characterised in that** the flow-through openings (51) are formed by round holes, wherein the diameter of the round holes is, in particular, 2 mm to 6 mm.

5. The suction system according to any one of the preceding claims, **characterised in that** the lower region of the processing unit (2) underneath and/or within the calm zone is designed to be removable as a particle collection bin (24).

## Revendications

1. Système d'aspiration (1) avec une unité de traitement (2) et un flux volumétrique d'aspiration (3) réglable dans l'unité de traitement (2) avec une charge en particules, le flux volumétrique d'aspiration (3) pouvant être introduit dans l'unité de traitement (2) via une tubulure (4),
le flux volumétrique d'aspiration (3) pouvant être introduit dans l'unité de traitement (2), dans une région centrale entre le fond inférieur (21) et le fond supérieur (22) de l'unité de traitement (2) via une tubulure (4) à travers un orifice d'entrée (34) sur l'unité de traitement (2), dans l'unité de traitement (2) étant placés des filtres (7) par l'intermédiaire desquels le flux volumétrique d'aspiration (3) peut être soutiré à partir de ces derniers dans un espace à filtrat,
les filtres (7) étant conçus en tant que filtres circulaires (71) saillant verticalement vers le bas à partir du dessous du fond supérieur (22), à partir d'un fond intermédiaire (22a) séparant un espace de traitement et l'espace à filtrat,
le flux volumétrique d'aspiration (3) s'écoulant d'abord dans une direction d'affluence (35) dans l'unité de traitement (2), à travers l'orifice d'entrée (34) dans une zone d'entrée,
dans la zone d'entrée, en aval de l'orifice d'entrée (34) dans la direction d'affluence (35) étant placée une tôle de guidage (5) avec des orifices de passage (51),
la tôle de guidage (5) déviant le flux volumétrique d'aspiration (3) pour une majeure partie (31) de la direction d'affluence (35) initiale, en fonction de la conformation et de la direction ou de l'incidence de la tôle de guidage (5) et
la tôle de guidage (5) étant conçue de telle sorte que la section transversale d'écoulement s'élargisse après la tôle de guidage (5) dans la direction d'écoulement et la tôle de guidage (5) étant conformée de sorte que dans l'unité de traitement (2), un écoulement rotatoire se forme autour des filtres (7, 71), dans la région de la zone d'écoulement (62),
l'orifice d'entrée (34) définissant un axe central,
la tôle de guidage (5) se raccordant sur l'extrémité inférieure de l'orifice d'entrée (34) et s'étendant sous un angle vers le haut en s'éloignant de l'orifice d'entrée (34), de sorte que pour une plus petite partie (32), le flux volumétrique d'aspiration puisse être dirigé, à travers une pluralité d'orifices de passage (51) prévus dans la tôle de guidage (5) plus loin, en direction de la direction d'affluence (35) vers les filtres (7),
la tôle de guidage (5) se coudant à partir de la région au-dessus du centre ou de l'axe central de l'orifice d'entrée (34) et s'étendant à la verticale vers le haut.

2. Système d'aspiration selon la revendication 1, **caractérisé en ce que**, dans son extension superficielle, la tôle de guidage (5) est plus grande que la largeur d'ouverture de l'orifice d'entrée (34).

3. Système d'aspiration selon l'une quelconque des revendications précédentes, **caractérisé en ce que** la pluralité d'orifices d'écoulement (51) forme ensemble dans la tôle de guidage (5) une surface transversale libre de 10 % à 50 % de la surface de la tôle de guidage (5).

4. Système d'aspiration selon l'une quelconque des revendications précédentes, **caractérisé en ce que** les orifices d'écoulement (51) sont formés par des trous circulaires, le diamètre des trous circulaires étant notamment de 2 à 6 mm.

5. Système d'aspiration selon l'une quelconque des revendications précédentes, **caractérisé en ce que** sous et/ou à l'intérieur de la zone calmée, la région inférieure de l'unité de traitement (2) est conçue en étant amovible, en faisant office de collecteur de particules (24).
